(19) **Europäisches Patentamt / European Patent Office / Office européen des brevets**

(11) **EP 4 450 554 A1**

(12) **EUROPEAN PATENT APPLICATION**

(43) Date of publication:
**23.10.2024 Bulletin 2024/43**

(21) Application number: **23168800.3**

(22) Date of filing: **19.04.2023**

(51) International Patent Classification (IPC):
**C08L 23/12** (2006.01)  **C08L 23/14** (2006.01)

(52) Cooperative Patent Classification (CPC):
(C-Sets available)
**C08L 23/12; C08J 5/18;** C08J 2323/14  (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Basell Poliolefine Italia S.r.l.**
**20121 Milano (IT)**

(72) Inventors:
- **Riemma, Antonio**
  **44122 Ferrara (IT)**
- **Cavalieri, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(54) **PROPYLENE HOMOPOLYMER BASED COMPOSITON**

(57) A propylene homopolymer based composition having:

i) ethylene derived units content, measured by $^{13}$C-NMR, ranging from 0.3 mol% to 1.8 mol%;

ii) 1-butene derived units content, measured by $^{13}$C-NMR, ranging from 0.4 mol% to 2.5 mol%;

iii) the $C^{13}$ NMR sequences XEX wherein X can be a propylene derived unit or a 1-butene derived unit, ranging from 0.20 mol% to 0.55 mol%;

iv) the $C^{13}$ NMR sequences EEE ranging from 0.05 mol% to 0.40 mol%;

v) the $C^{13}$ NMR sequences XBX , X can be a propylene derived unit or a 1-butene derived unit ranging from 0.50 mol% to 2.20 mol%;

vi) the $C^{13}$ NMR sequences BBE are not present;

vii) melt flow rate, MFR, measured according to ISO 1133 at 230 °C with a load of 2.16 kg, ranging from 3.6 g/10 min to 11.4 g/10 min;

viii) xylene soluble fraction at 25°C ranging from 4.8 wt% to 10.7 wt%.

(52) Cooperative Patent Classification (CPC): (Cont.)

C-Sets
**C08L 23/12, C08L 23/142**

**Description**

FIELD OF THE INVENTION

The present invention relates to propylene homopolymer based composition comprising propylene homopolymer, and propylene copolymers containing ethylene and 1-butene as comonomers having a good mechanical properties fit for producing films.

BACKGROUND OF THE INVENTION

Films made of propylene homopolymer based composition copolymers or terpolymers are known in the art. Propylene homopolymer are widely used for films in particular cast films however due to the nature of the polymer it is difficult to find the acceptable balance between mechanical properties, particularly when properties contrasting to each other are desired. The applicant unexpectedly found that by adding small amounts of propylene copolymers or terpolymers to propylene homopolymer it is possible to improve the mechanical properties of the propylene homopolymer.

SUMMARY OF THE INVENTION

An object of the present disclosure is a propylene homopolymer based composition having:

i) ethylene derived units content, measured by $^{13}$C-NMR, ranging from 0.3 mol% to 1.8 mol%;
ii) 1-butene derived units content, measured by $^{13}$C-NMR, ranging from 0.4 mol% to 2.5 mol%;
iii) the C$^{13}$ NMR sequences XEX wherein X can be a propylene derived unit or a 1-butene derived unit, ranging from 0.20 mol% to 0.55 mol%;
iv) the C$^{13}$ NMR sequences EEE ranging from 0.05 mol% to 0.40 mol%;
v) the C$^{13}$ NMR sequences XBX , X can be a propylene derived unit or a 1-butene derived unit ranging from 0.50 mol% to 2.20 mol%;
vi) the C$^{13}$ NMR sequences BBE are not present;
vii) melt flow rate, MFR, measured according to ISO 1133 at 230 °C with a load of 2.16 kg, ranging from 3.6 g/10 min to 11.4 g/10 min;
viii) xylene soluble fraction at 25°C ranging from 4.8 wt% to 10.7 wt%.

DETAILED DESCRIPTION OF THE INVENTION

An object of the present disclosure is a propylene homopolymer based composition having:

i) ethylene derived units content, measured by $^{13}$C-NMR, ranging from 0.3 mol% to 1.8 mol%, preferably ranging from 0.4 mol% to 1.7 mol%, more preferably ranging from 0.6 mol% to 0.4 mol%,;
ii) 1-butene derived units content, measured by $^{13}$C-NMR, ranging from 0.4 mol% to 2.5 mol%, preferably ranging from 0.5 mol% to 2.0 mol%, more preferably ranging from 0.7 mol% to 1.5 mol%;
iii) the C$^{13}$ NMR sequences XEX wherein X can be a propylene derived unit or a 1-butene derived unit, ranging from 0.20 mol% to 0.55 mol%; preferably ranging from 0.25 mol% to 0.50 mol%, more preferably ranging from 0.32 mol% to 0.46 mol%
iv) the C$^{13}$ NMR sequences EEE ranging from 0.05 mol% to 0.40 mol%; preferably ranging from 0.10 mol% to 0.35 mol%, more preferably ranging from 0.15 mol% to 0.32 mol%;
v) the C$^{13}$ NMR sequences XBX , X can be a propylene derived unit or a 1-butene derived unit ranging from 0.50 mol% to 2.20 mol%, preferably ranging from 0.68 mol% to 1.90 mol%, more preferably ranging from 0.75 mol% to 1.64 mol%;
vi) the C$^{13}$ NMR sequences BBE are not present;
vii) melt flow rate, MFR, measured according to ISO 1133 at 230 °C with a load of 2.16 kg, ranging from 3.6 g/10 min to 11.4 g/10 min, preferably ranging from 5.6 g/10 min to 9.4 g/10 min, more preferably ranging from 6.6 g/10 min to 9.0 g/10 min;
viii) xylene soluble fraction at 25°C ranging from 4.8 wt% to 10.7 wt%, preferably ranging from 5.3 wt% to 9.8 wt%, more preferably ranging from 6.2 wt% to 9.2 wt%.

For the present disclosure, the term "copolymer" is referred to polymers containing only two kinds of comonomers, such as propylene and ethylene.
For the present disclosure, the term "terpolymer" is referred to polymers containing only three kinds of comonomers, such as propylene, 1-butene and ethylene.

Preferably propylene homopolymer based composition has a tensile modulus ranging from 750 MPa to 1500 MPa, preferably ranging from 800 MPa to 1300 MPa.

Preferably propylene homopolymer based composition has the charpy impact measured at 23°C ranging from 2.0 N/mm2 to 7.5 N/mm2, preferably ranging from 3.5 N/mm2 to 6.6 N/mm2.

Preferably propylene homopolymer based composition has the haze measured on a 50 $\mu$m cast film ranging from 0.5% to 3.2 % , preferably ranging from 0.7% to 2.5 %.

Preferably propylene homopolymer based composition has the elongation at break measured according to ISO 527-2, and according to ISO 1873-2, ranging from 120 % to 600%; preferably ranging from 150 % to 500%.

Preferably propylene homopolymer based composition does not contains limonene.

Preferably propylene homopolymer based composition is obtained by blending propylene homopolymer with a propylene ethylene 1 butene terpolymer and optionally with a propylene ethylene copolymer and or a propylene 1-butene copolymer.

Propylene homopolymer, propylene ethylene 1 butene terpolymer, propylene ethylene copolymer and propylene 1-butene copolymer can be easily found on the market.

Examples of propylene homopolymer are Moplen HP510M, HP420M, HA612M sold by Lyondellbasell.

Example of propylene ethylene 1 butene terpolymer are Adsyl 5 C 30 F ST, Adsyl RC3800 ST, Adsyl RC139L ST sold by Lyondellbasell.

Example of propylene ethylene copolymer are Moplen RP220M, Clyrell RC112L, Moplen RP220M M HP sold by Lyondellbasell.

Example of propylene 1-butene copolymer are Clyrell RC213M, Adsyl 3 C 30 F HP sold by Lyondellbasell.

By fine tuning the various components it is possible to fine tuning the MFR and the xylene soluble content.

Preferably the propylene homopolymer based composition comprises:

T1) from 90 wt% to 70 wt%; preferably from 88 wt% to 75 wt; of a propylene homopolymer;

T2) from 0 wt% to 30 wt% of a propylene ethylene 1 butene terpolymer;

T3) from 0 wt% to 20 wt% of a propylene 1-butene copolymer;

T4) from 0 wt% to 20 wt of a propylene ethylene copolymer;

Wherein if T2 is equal to 0 then T3 and T4 are both different from 0;

the sum of the amounts of T1, T2, T3 and T4 in wt% being 100 wt%;

More preferably the propylene homopolymer based composition comprises:

T1) from 90 wt% to 70 wt%; preferably from 88 wt% to 75 wt; of a propylene homopolymer;

T2) from 10 wt% to 30 wt% preferably from 12 wt% to 25 wt% of a propylene ethylene 1 butene terpolymer;

the sum of the amounts of T1 of T2 in wt% being 100 wt%.

More preferably the propylene homopolymer based composition comprises:

T1) from 90 wt% to 70 wt%; preferably from 88 wt% to 75 wt; of a propylene homopolymer;

T3) from 3 wt% to 20 wt%, preferably from 6 wt% to 18 wt% of a propylene 1-butene copolymer;

T4) from 3 wt% to 20 wt%, preferably from 6 wt% to 18 wt% of a propylene ethylene copolymer;

the sum of the amounts of T1, T3 and T4 in wt% being 100 wt%.

Film obtained with the propylene homopolymer based composition are endowed with a good elongation at break both in machine direction and traverse direction and a good value of haze.

Common additives for olefin polymers can be used with the propylene homopolymer based composition.

The propylene homopolymer based composition of the present disclosure can be advantageously used for the preparation of films, such as cast film, and BOPP film. Cast films being preferred.

Thus a further object of the present disclosure is a film comprising the propylene homopolymer based composition of the present disclosure.

The following examples are given to illustrate, not to limit, the present disclosure:

EXAMPLES

**Xylene-soluble (XS) Fraction at 25 °C**

Xylene Solubles at 25°C have been determined according to ISO 16 152; with solution volume of 250 ml, precipitation at 25°C for 20 minutes, 10 of which with the solution in agitation (magnetic stirrer), and drying at 70°C.

**DSC method for melting temperature and crystallization temperature**

Melting point has been measured according to ISO 11357-3, at scanning rate of 20C/min both in cooling and heating, on a sample of weight between 5 and 7 mg., under inert N2 flow. Instrument calibration made with indium

**Melt Flow Rate (MFR)**

Measured according to ISO 1133 at 230 °C with a load of 2.16 kg, unless otherwise specified.

Comonomer content (NMR)

For determining the content of comonomers via 13C-NMR analysis, it was worked according to the following procedure. 13C NMR spectra were acquired on a Bruker AV600 spectrometer equipped with cryo probe, operating 150.91 MHz in the Fourier transform mode at 120°C. The peak of the $S\delta\delta$ carbon (nomenclature according C.J. Carman, R.A. Harrington and C.E. Wilkes, Macromolecules, 10, 3, 536 (1977)) was used as internal reference at 29.9 ppm. About 30 mg of sample were dissolved in 0.5 ml of 1,1,2,2 tetrachloro ethane d2 at 120 °C w. Each spectrum was acquired with a 90 ° pulse, 15 seconds of delay between pulses and CPD to remove 1H-13C coupling. 512 transients were stored in 65 K data points using a spectral window of 9000 Hz. Triad distribution was obtained using the following relations:

$$XPX = 100\, I_8 / \Sigma$$

$$XPE = 100\, I_5 / \Sigma$$

$$EPE = 100\, I_4 / \Sigma$$

$$XBX = 100\, I_3 / \Sigma$$

$$XBE = 100\, I_2 / \Sigma$$

$$XEX = 100\, I_9 / \Sigma$$

$$XEE = 100\, I_1 / \Sigma$$

$$EEE = 100\, (0.5\, I_7 + 0.25\, I_6) / \Sigma$$

wherein:

- 

$$\Sigma = I_8 + I_5 + I_4 + I_3 + I_2 + I_9 + I_1 + 0.5\,I_7 + 0.25\,I_6;$$

- I are the areas of the corresponding carbon as reported in Table;
- and X can be propylene or 1-butene.

The molar content of ethylene (E), propylene (P) and 1-butene (B) is obtained from triads using the following relations:

$$P\,(m\%) = XPX + XPE + EPE$$

$$B\,(m\%) = XBX + XBE + EBE$$

$$E\,(m\%) = EEE + XEE + XEX$$

Molar content was transformed in weight content using monomers molecular weight.

### Assignments of the $^{13}$C NMR spectrum of Ethylene/Propylene/1-Butene terpolymers

| Number | Chemical Shift (ppm) | Carbon | Sequence |
|--------|----------------------|--------|----------|
| 1 | 37.64 - 37.35 | $S_{\alpha\delta}$ | PEE |
| 2 | 37.35 - 37.15 | $T_{\beta\delta}$ | XBE |
| 3 | 35.27 - 34.92 | $T_{\beta\beta}$ | XBX |
| 4 | 33.29 - 33.15 | $T_{\delta\delta}$ | EPE |
| 5 | 30.93 - 30.77 | $T_{\beta\delta}$ | XPE |
| 6 | 30.35 - 30.26 | $S_{\gamma\delta}$ | PEEE |
| 7 | 29.97 - 29.85 | $S_{\delta\delta}$ | EEE |
| 8 | 29.14 - 28.31 | $T_{\beta\beta}$ | XPX |
| 9 | 24.88 - 24.14 | $S_{\beta\beta}$ | XEX |

### Tensile modulus, and elongation at break

Tensile modulus, and elongation at break has been measured according to ISO 527-2, and according to ISO 1873-2.

### Charpy impact at 23°C

Charpy impact has been measured according to ISO 179-1eA, and ISO 1873-2.

### Preparation of the Film Specimens

Films with a thickness of 50 $\mu$m are prepared by extruding each test composition in a single screw Collin extruder (length/diameter ratio of screw: 25) at a film drawing speed of 7 m/min. and a melt temperature of 210-250° C.

**Haze**

Determined on 50 μm thick cast films of the test composition. The measurement was carried out on a 50×50 mm portion cut from the central zone of the film.

The instrument used for the test was a Gardner photometer with Haze-meter UX-10 equipped with a G.E. 1209 lamp and filter C. The instrument calibration was made by carrying out a measurement in the absence of the sample (0% Haze) and a measurement with intercepted light beam (100%Haze).

Example 1 preparation of the propylene homopolymer based composition.

Component T1 is Adstif HA612M, a propylene homopolymer sold by Lyondellbasell.

Component T2 is Propylene terpolymer sold under the tradename Adsy 5 C30F being a propylene ethylene 1-butene terpolymer having an ethylene content of 5.0 mol% a 1-butene content of 4.7 mol% wt% MFR of 5.2 g/10 min and a fraction soluble in xylene at 25°C of 10.3%. 81wt% of T1 has been blended with 19 wt% of T2 to get a composition having the features reported in table 1

**Table 1**

|  |  | Ex1 | Comp Ex 2 |
|---|---|---|---|
| Ethylene | Mol% | 1.0. | 0 |
| 1-butene | Mol% | 0.8 | 0 |
| XEX | Mol% | 0.44 | 0 |
| EEE | Mol% | 0.29 | 0 |
| XBX | Mol% | 0.84 | 0 |
| BBE | Mol% | 0.00 | 0 |
| MFR, 230 °C 2.16 kg, | g/10 min | 8.3 | 7.9 |
| Xs | Wt% | 7.0 | 2.6 |
| Tensile modulus | MPa | 1110 | 1970 |
| charpy impact measured at 23°C | N/mm$^2$ | 5.0 | nm |
| Elongation at break | % | 270 | 24 |
| Cast film |  |  |  |
| haze | % | 2.1 | 7.2 |
| nm not measured |  |  |  |

Comparative Ex 2 is the commercial grade Adstif HA612M a propylene homopolymer sold by Lyondellbasell for cast film.

**Claims**

**1.** A propylene homopolymer based composition having:

i) ethylene derived units content, measured by $^{13}$C-NMR, ranging from 0.3 mol% to 1.8 mol%;
ii) 1-butene derived units content, measured by $^{13}$C-NMR, ranging from 0.4 mol% to 2.5 mol%;
iii) the C$^{13}$ NMR sequences XEX wherein X can be a propylene derived unit or a 1-butene derived unit, ranging from 0.20 mol% to 0.55 mol%;
iv) the C$^{13}$ NMR sequences EEE ranging from 0.05 mol% to 0.40 mol%;
v) the C$^{13}$ NMR sequences XBX , X can be a propylene derived unit or a 1-butene derived unit ranging from 0.50 mol% to 2.20 mol%;
vi) the C$^{13}$ NMR sequences BBE are not present;
vii) melt flow rate, MFR, measured according to ISO 1133 at 230 °C with a load of 2.16 kg, ranging from 3.6 g/10 min to 11.4 g/10 min;
viii) xylene soluble fraction at 25°C ranging from 4.8 wt% to 10.7 wt%.

2. The propylene homopolymer based composition according claim 1 wherein the ethylene derived units content, measured by 13C-NMR, ranges from 0.4 mol% to 1.7 mol%.

3. The propylene homopolymer based composition according to anyone of claims 1-2 wherein 1-butene derived units content, measured by $^{13}$C-NMR, ranges from 0.5 mol% to 2.0 mol%,.

4. The propylene homopolymer based composition according to anyone of claims 1-3 wherein the C$^{13}$ NMR sequences XEX wherein X can be a propylene derived unit or a 1-butene derived unit, ranges from 0.25 mol% to 0.50 mol%.

5. The propylene homopolymer based composition according of claims 1-4 wherein the C$^{13}$ NMR sequences EEE ranges from 0.10 mol% to 0.35 mol%.

6. The propylene homopolymer based composition according to anyone of claims 1-5 the C$^{13}$ NMR sequences XBX , X can be a propylene derived unit or a 1-butene derived unit ranges from 0.68 mol% to 1.90 mol%.

7. The propylene homopolymer based composition according to anyone of claims 1-6 wherein the melt flow rate, MFR, measured according to ISO 1133 at 230 °C with a load of 2.16 kg, ranges from 5.6 g/10 min to 9.4 g/10 min.

8. The propylene homopolymer based composition according to anyone of claims 1-7 wherein the xylene soluble fraction at 25°C ranges from 5.3 wt% to 9.8 wt%.

9. The propylene homopolymer based composition according to anyone of claims 1-8 not containing limonene.

10. The propylene homopolymer based composition according to anyone of claims 1-9 wherein having a tensile modulus ranging from 750 MPa to 1200 MPa.

11. The propylene homopolymer based composition according to anyone of claims 1-10 wherein the charpy impact measured at 23°C ranging from 2.0 N/mm$^2$ to 7.5 N/mm$^2$.

12. The propylene homopolymer based composition according to anyone of claims 1-11 wherein the haze measured on a 50 $\mu$m cast film ranges from 0.5% to 3.2 %.

13. The propylene homopolymer based composition according to anyone of claims 1-12 comprising.

   T1) from 90 wt% to 70 wt%; preferably from 88 wt% to 75 wt; of a propylene homopolymer;
   T2) from 0 wt% to 30 wt% of a propylene ethylene 1 butene terpolymer;
   T3) from 0 wt% to 20 wt% of a propylene 1-butene copolymer;
   T4) from 0 wt% to 20 wt of a propylene ethylene copolymer;
   wherein if T2 is equal to 0 then T3 and T4 are both different from 0;
   the sum of the amounts of T1, T2, T3 and T4 in wt% being 100 wt%.

14. The propylene homopolymer based composition according to anyone of claims 1-13 comprising:

   T1) from 90 wt% to 70 wt% of a propylene homopolymer;
   T2) from 10 wt% to 30 wt% of a propylene ethylene 1 butene terpolymer;
   the sum of the amounts of T1 of T2 in wt% being 100 wt%.

15. Cast film comprising the propylene homopolymer based composition of claims 1-13.

Europäisches
Patentamt

European
Patent Office

Office européen
des brevets

# EUROPEAN SEARCH REPORT

Application Number

EP 23 16 8800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/027033 A1 (SYROM 90 SPA [IT]; NASSI ALDO [IT]; LEPORI ALESSANDRO [IT]) 16 March 2006 (2006-03-16) <br> * page 3, line 3 - line 12 * <br> * page 7, line 33 - page 8, line 8 * <br> * table; <br> page 11 * <br> * examples * <br> ----- | 1-15 | INV. <br> C08L23/12 <br> C08L23/14 |
| A | US 2022/251260 A1 (MIZUMA TAKAHIRO [JP] ET AL) 11 August 2022 (2022-08-11) <br> * paragraph [0201] - paragraph [0202] * <br> * paragraph [0195] * <br> * paragraph [0203] * <br> * table 1: (A1-A5) * <br> * see table 2, example 1-3 * <br> ----- | 1-15 | |

TECHNICAL FIELDS
SEARCHED      (IPC)

C08L

The present search report has been drawn up for all claims

| Place of search | Date of completion of the search | Examiner |
|---|---|---|
| Munich | 6 October 2023 | Thomas, Dominik |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 16 8800

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2023

| Patent document cited in search report | | Publication date | Patent family member(s) | | Publication date |
|---|---|---|---|---|---|
| WO 2006027033 | A1 | 16-03-2006 | CA | 2578593 A1 | 16-03-2006 |
| | | | EP | 1634699 A1 | 15-03-2006 |
| | | | EP | 1786624 A1 | 23-05-2007 |
| | | | RU | 2384413 C2 | 20-03-2010 |
| | | | US | 2008318036 A1 | 25-12-2008 |
| | | | WO | 2006027033 A1 | 16-03-2006 |
| | | | ZA | 200701834 B | 30-04-2008 |
| US 2022251260 | A1 | 11-08-2022 | CN | 113825778 A | 21-12-2021 |
| | | | EP | 3978543 A1 | 06-04-2022 |
| | | | JP | 7256581 B2 | 12-04-2023 |
| | | | JP | 2023041732 A | 24-03-2023 |
| | | | JP | 2023041733 A | 24-03-2023 |
| | | | JP | WO2020241740 A1 | 03-12-2020 |
| | | | KR | 20210154987 A | 21-12-2021 |
| | | | US | 2022251260 A1 | 11-08-2022 |
| | | | WO | 2020241740 A1 | 03-12-2020 |

EPO FORM P0459

For more details about this annex : see Official Journal of the European Patent Office, No. 12/82